**Europäisches Patentamt**

**European Patent Office**

**Office européen des brevets**

(19)

(11) Veröffentlichungsnummer: **0 232 926 B1**

# EUROPÄISCHE PATENTSCHRIFT

(12)

(45) Veröffentlichungstag der Patentschrift: **08.04.92**

(51) Int. Cl.⁵: **A23G 9/12**

(21) Anmeldenummer: **87200029.4**

(22) Anmeldetag: **12.01.87**

(54) **Mischwerkzeug für eine Speiseeismaschine.**

(30) Priorität: **16.01.86 AT 93/86**

(43) Veröffentlichungstag der Anmeldung:
**19.08.87 Patentblatt 87/34**

(45) Bekanntmachung des Hinweises auf die
Patenterteilung:
**08.04.92 Patentblatt 92/15**

(84) Benannte Vertragsstaaten:
**DE ES FR GB IT NL**

(56) Entgegenhaltungen:
EP-A- 0 161 679     EP-A- 0 206 430
WO-A-85/03998      DE-A- 3 544 671
FR-A- 1 023 909     FR-A- 2 047 518
FR-A- 2 403 747     GB-A- 2 077 128
US-A- 4 070 957     US-A- 4 392 361

(73) Patentinhaber: **N.V. Philips' Gloeilampenfabrieken**
**Groenewoudseweg 1**
**NL-5621 BA Eindhoven(NL)**

(72) Erfinder: **Eckel, Merowech INT. OCTROOIBU-
REAU B.V.**
**Prof. Holstlaan 6**
**NL-5656 AA Eindhoven(NL)**
Erfinder: **Ramusch, Wolfgang INT. OCTROOI-
BUREAU B.V.**
**Prof. Holstlaan 6**
**NL-5656 AA Eindhoven(NL)**

(74) Vertreter: **Bos, Kornelis Sjoerd et al**
**INTERNATIONAAL OCTROOIBUREAU B.V.**
**Prof. Holstlaan 6**
**NL-5656 AA Eindhoven(NL)**

Rank Xerox (UK) Business Services

## Beschreibung

Die Erfindung betrifft ein Mischwerkzeug für eine Speiseeismaschine, das in einen zylindrischen Behälter der Speiseeismaschine zentrisch einführbar und dort rotierend antreibbar ist und das mindestens einen von einer zentralen Welle auskragenden Schaber aufweist an dessen von der zentralen Welle abgewandten Ende ein im Bereich der Behälterwand wirksamer Rührer angeordnet ist, der einen im Behälter zumindest von unten nach oben gerichteten Strömungsverlauf einer in denselben eingefüllten Speiseeismischung bewirkt und der gegenüber der zentralen Welle geneigt verlaufend angeordnet ist und der eine gegenüber der zentralen Welle geneigt verlaufende mit der Behälterwand zusammenwirkende Schabkante aufweist.

Ein derartiges Mischwerkzeug für eine Speiseeismaschine, die als Haushaltsgerät Verwendung findet, ist aus der EP-A 0 161 679 bekannt. An ein solches Mischwerkzeug werden die Anforderungen gestellt, dass es eine in den Behälter eingefüllte, vorerst flüssige Speiseeismischung im Zuge der Bildung des Speiseeises laufend gut vermischt und sich an der Behälterwand, dem Behälterboden oder einer in den Behälter eingelegten Kältepatrone bildendes Speiseeis abschabt und dieses wieder gleichmässig in der Speiseeismischung verteilt, so dass es zu einer einwandfreien Bildung von Speiseeis mit gleichmässiger Konsistenz kommt. Demgemäss weist ein solches Mischwerkzeug üblicherweise mehrere Abschnitte auf, die einerseits als Schaber und andererseits als Rührer ausgebildet beziehungsweise wirksam sind.

Bei dem Mischwerkzeug gemäss der EP-A 0 161 679 wird von im Bereich der Behälterwand wirksamen Rührer Speiseeismischung von unten nach oben gefördert, die oberhalb des freien oberen Endes des Rührers an der Behälterwand ablagert und dort als nicht fertiges Speiseeis anfriert. Eine Verlängerung des Rührers mit einen längeren Schabkante gibt keine Verbesserung, weil dabei nur das Speiseeis noch höher gefördert wird und an der Behälterwand anfriert.

Die Erfindung hat sich zum Ziel gesetzt, ein Mischwerkzeug der eingangsangeführten Gattung hinsichtlich seiner Wirkungsweise weiter zu verbessern, um eine noch einwandfreiere Speiseeisbildung zu erreichen. Erfindungsgemäss ist hierzu vorgesehen, dass der Rührer zusätzlich an Leerstelle seinem freien oberen Ende einen den Rührer überragenden Zusatzschaber aufweist, der eine parallel zu der achse der zentralen Welle verlaufende, mit der Behälterwand zusammenwizkende, messerförmige Zusatzschabkante aufweist, die einer Winkel mit der Schabkante des Rührers bildet.

Auf diese Weise ist erreicht, dass sich keine vom Rührer von unten nach oben geförderte Speiseeismischung oberhalb des freien oberen Endes des Rührers an der Behälterwand ablagern und dort gegebenenfalls als nicht fertiges Speiseeis anfrieren kann, da solche Ablagerungen vom erfindungsgemäss am Rührer zusätzlich vorgesehehen Schaber stets wieder abgetragen und der übrigen Speiseeismischung im Behälter zugeführt werden. Hierbei wird die Misch- und Rührwirkung des Rührers an sich nicht nachteilig beeinflusst, da der zusätzliche Schaber zufolge seiner messerförmigen und damit relativ schmalen Ausbildung ausschliesslich eine Schabwirkung hervorruft, ohne den durch den Rührer selbst bewirkten Strömungsverlauf der Speiseeismischung im Behälter zu beeinflussen.

Es sei an dieser Stelle erwähnt, dass aus der EP-A 0 091 825 beziehungsweise der FR-B-1 019 664 Mischwerkzeuge für eine Speiseeismaschine bekannt sind, bei welchen Rührer, die eine im Behälter von unten nach oben gerichtete Strömung einer in denselben eingefüllten Speiseeismischung bewirken, an ihrem freien oberen, der Behälterwand benachbarten Ende mit einem geneigt verlaufenden, vorspringenden, schaufelförmigen Ansatz versehen sind, der dazu dient, die vom Rührer von unten nach oben geförderte Speiseeismischung im Bereich der Behälterwand umzulenken und wieder in einer nach unten hin gerichteten Strömung der Speiseeismischung zuzuführen. Hiedurch wird aber der durch den Rührer absichtlich bewirkte Strömungsverlauf der Speiseeismischung von unten nach oben gestört, was Turbulenzen zur Folge hat, welche die gleichmäßige Vermischung der Speiseeismischung nachteilig beeinflussen können, wobei es beispielsweise zu einer Knollenbildung im Speiseeis kommen kann. Demgegenüber hat der erfindungsgemäß zusätzlich am Rührer vorgesehene Schaber keinen Einfluß auf den durch den Rührer bewirkten Strömungsverlauf der Speiseeismischung, sondern schabt nur die sich gegebenenfalls oberhalb des freien oberen Endes des Rührers an der Behälterwand ablagernde Speiseeismischung ab und führt sie so wieder der übrigen Speiseeismischung im Behälter zu. Damit wird die Gleichmäßigkeit der Vermischung der Speiseeismischung nicht nachteilig beeinflußt.

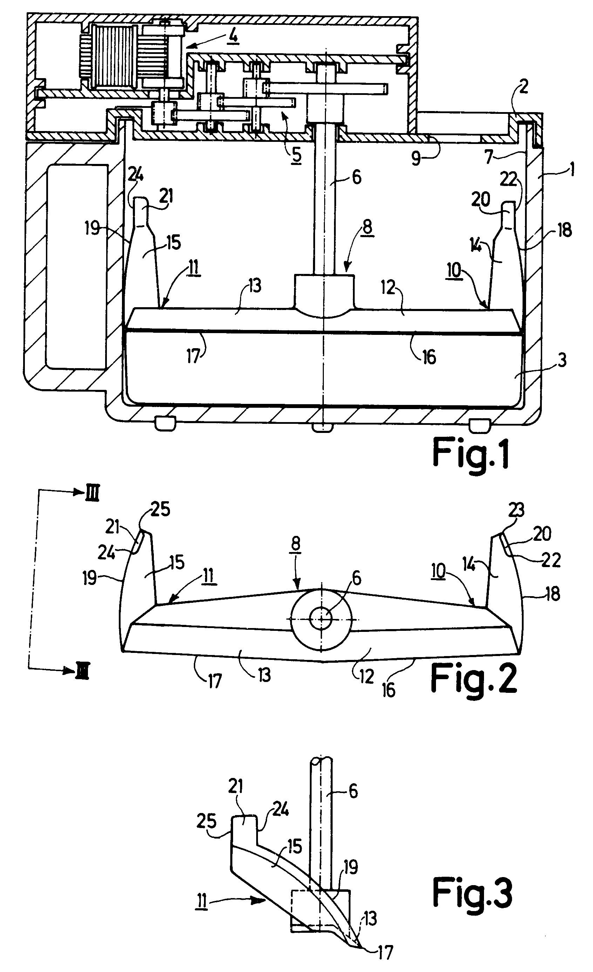

Die Erfindung wird im folgenden anhand der Zeichnung, in der ein Ausführungsbeispiel der Erfindung dargestellt ist, auf das sie aber nicht beschränkt sein soll, näher erläutert. Fig.1 zeigt eine Speiseeismaschine mit einem erfindungsgemäßen Mischwerkzeug teilweise im Schnitt in Seitenansicht. Fig.2 Zeigt das Mischwerkzeug der Speiseeismaschine nach Fig.1 in Draufsicht. Fig.3 zeigt das Mischwerkzeug nach Fig.2 in der Seitenansicht nach der Linie III-III in Fig.2

In Fig.1 ist mit 1 ein thermisch isolierter zylindrischer Behälter bezeichnet, der durch einen zweckmäßigerweise an ihm verriegelbaren Deckel 2 abschließbar ist. In den Behälter 1 ist eine scheibenförmige Kältepatrone 3 eingelegt, die ein Latentwärmespeichermittel enthält. Im Deckel 2 ist ein Elektromotor 4 untergebracht, der über ein Getriebe 5, das hier als dreistufiges Zahnradgetriebe ausgebildet ist, eine zentral zum Behälter 1 verlaufende Welle 6 antreibt, die ein mit der Kältepatrone 3 und der umfangsseitigen Behälterwand 7 zusammenwirkendes Mischwerkzeug 8 trägt. Falls erwünscht, kann der Elektromotor 4 zusammen mit dem Getriebe 5 als eine vom Deckel 2 abnehmbare Baueinheit ausgebildet sein. Ebenso kann die Welle 6 zusammen mit dem Mischwerkzeug 8 mittels einer Steckverbindung vom Getriebe lösbar sein. Zwischen dem Getriebe 5 und der Welle 6 kann auch eine Federanordnung vorgesehen sein, welche das Mischwerkzeug unter Federdruck an der Kältepatrone angelegt hält, um ein Abschaben des sich an der Kältepatrone bildenden Speiseeises besonders sicher zu gestalten.

Vor der Inbetriebnahme der Speiseeismaschine wird die Kältepatrone 3 beispielsweise in einem Tiefkühlschrank eines Kühlschrankes abgekühlt und danach in den Behälter 1 eingelegt. Hierauf wird der Deckel 2 mit dem Mischwerkzeug 8 auf den Behälter 1 aufgesetzt, wonach durch die im Deckel 2 vorgesehene Einfüllöffnung 9 eine Speiseeismischung eingefüllt wird. Nach dem Einschalten des Elektromotors 4 beginnt sich das Mischwerkzeug 8 zu drehen, wobei die Speiseeismischung vermischt und das sich jeweils an der Kältepatrone bildend Speiseeis abgeschabt und wieder mit der Speiseeismischung vermischt wird, dies solange, bis nur noch Speiseeis mit der gewünschten Temperatur und Konsistenz vorhanden ist.

Bei dieser Speiseeismaschine ist als Elektromotor 4 ein selbstanlaufender Einphasensynchronmotor vorgesehen, der bei relativ kleinen Abmessungen in der Lage ist, eine relativ hohe Leistung abzugeben. Bekanntlich ist die Drehrichtung, in der ein Einphasensynchronmotor anläuft, nicht festgelegt, so daß die Welle 6 in einer der beiden Drehrichtungen angetrieben werden kann. Demgemäß weist das Mischwerkzeug 8 für beide Drehrichtungen der Welle 6 mindestens je einen vorwiegend in der betreffenden Drehrichtung wirksamen, L-förmig ausgebildeten Mischwerkzeugabschnitt 10 bzw. 11 auf. Beim vorliegenden Ausführungsbeispiel ist für jede der beiden Drehrichtungen der Welle 6 je ein solcher Mischwerkzeugabshnitt 10 und 11 vorgesehen, die spiegelbildlich zur Welle 6 ausgebildet sind, wie dies Fig.2 zeigt. Jeder dieser Mischwerkzeugabschnitte 10 bzw. 11 weist einen von der Welle 6 auskragenden, mit der Kältepatrone 3 zusammenwirkenden Schaber 12 bzw. 13 und einen von diesem L-förmig abgewinkelten Rührer 14 bzw.

15 auf, der ein Vermischen und Verrühren der Speiseeismischung bewirkt und auch mit der Behälterwand 7 schabend zusammenwirkt. Wie aus Fig.2 ersichtlich ist, liegt bei der Drehung des Mischwerkzeuges 8 im Uhrzeigersinn die Kante 16 des Schabers 12 vorne, wogegen bei einer Drehung entgegen dem Uhrzeigersinn die Kante 17 des Schabers 13 vorne liegt, so daß im erstgenannten Fall die Kante 16 und im zweitgenannten Fall die Kante 17 das Abschaben des sich an der Kältepatrone bildenden Speiseeises bewirkt. Entsprechendes gilt für die Kanten 18 bzw. 19 an den Rührern 14 bzw. 15, die mit de Behälterwand 7 zusammenwirken und von dort sich bildendes Speiseeis abschaben. Hiebei ist die Kante 18 des Rührers 14 bei der Drehung des Mischwerkzeuges 8 im Uhrzeigersinn und die Kante 19 des Rührers 15 bei Drehung entgegen dem Uhrzeigersinn als Schabkante wirksam. Weiters sind die Rührer 14 und 15 ebenfalls hinsichtlich der Welle 6 spiegelbildlich ausgebildet, und zwar beim vorliegenden Ausführungsbeispiel als in bezug auf die betreffende Drehrichtung von unten nach oben hin und in das Behälterinnere hin schrägstehende, ebene Flügel. Auf diese Weise bewirkt jeder der beiden Rührer 14 und 15 in einer der beiden Drehrichtungen der Welle 6, und zwar der bei der betreffenden Drehrichtung jeweils vorne liegende Rührer, einen im Behälter von unten nach oben und hier auch zum Behälterinneren hin gerichteten Strömungsverlauf der Speiseeismischung, weil diese an dem betreffenden Rührer von unten nach oben hin aufsteigt. Der bei der betreffenden Drehrichtung jeweils andere, hinten liegende Rührer bewirkt dann eine im wesentlichen umgekehrte Strömung der Speiseeismischung von oben nach unten zur Kältepatrone 3 und zur Behälterwand 7 hin. Auf diese Weise wird insgesamt gesehen eine gleichmäßige Vermischung der Speiseeismischung und eine gleichmäßige Bildung von Speiseeis erreicht. Selbstverständlich sind auch noch andere Ausbildungen der Rührer möglich, um den jeweils gewünschten Strömungsverlauf der Speiseeismischung zu erreichen. So können die Rührer beispielsweise auch bezüglich der betreffenden Drehrichtung konvex oder wendelförmig gekrümmt ausgebildet sein. Ebenso könnten für jede Drehrichtung der Welle 6 auch mehr als je ein vorwiegend in der betreffenden Drehrichtung wirksamer Mischwerkzeugabschnitt 10 bzw. 11 vorgesehen sein, die dann entsprechend winkelversetzt an der Welle 6 anzuordnen wären.

Wie aus den Figuren ersichtlich ist, weist nun jeder der beiden Rührer 14 bzw. 15 zusätzlich an seinem freien oberen, der Behälterwand 7 benachbarten Ende einen mit der Behälterwand 7 zusammenwirkenden, messerförmigen, den Rührer überragenden Schaber 20 bzw. 21 auf. Wie insbesondere Fig.2 zu entnehmen ist, sind diese zusätzlichen Schaber 2O und 21 beim vorliegenden Ausführungsbeispiel durch parallel zur Erzeugenden der Behälterwand 7 verlaufende, leistenförmige Ansätze gebildet, deren Seitenkanten zur Behälterwand 7 hin schneidenförmig abgeschrägt sind. Auf diese Weise ist an beiden Schabern 2O und 21, für beide Drehrichtungen des Mischwerkzeuges 8, je eine Schabkante 22 bzw. 23 und 24 bzw. 25 gebildet, die mit der Behälterwand 7 zusammenwirkt.

Diese an den Rührern 14 bzw. 15 zusätzlich vorgesehenen Schaber 2O bzw. 21 bewirken, daß sich oberhalb der freien oberen Enden der Rührer 14 und 15 an der Behälterwand 7 keine, durch den betreffenden Rührer von unten nach oben geförderte Speiseeismischung ablagern und dort gegebenen falls anfrieren kann, da sie von den zusätzlichen Schabern 20 und 21 laufend abgeschabt und so wieder der übrigen Speiseeismischung im Behälter zugeführt wird. Durch die messerförmige und damit relativ schmale Ausbildung der Schaber 20 und 21 wird dabei erreicht, daß der durch den betreffenden Rührer hervorgerufene Strömungsverlauf der Speiseeismischung von unten nach oben und im vorliegenden Fall auch in das Behälterinnere hin nicht beeinträchtigt oder behindert wird. Insgesamt gesehen wird daher mit einem derartigen Mischwerkzeug ein einwandfreies Vermischen und Verrühren der Speiseeismischung und eine einwandfreie Bildung von Speiseeis mit gleichmäßiger Konsistenz erreicht, wobei sich an der Behälterwand oberhalb des Mischwerkzeuges keine Speiseeismischung ablagern kann.

Selbstverständlich gibt es für die Ausbildung beziehungsweise Formgebung der an den Rührern 14 bzw. 15 zusätzlich vorgesehenen Schaber 20 bzw. 21 noch eine Reihe anderer Möglichkeiten. So können diese Schaber zur Bildung der Schabkanten verschiedene Querschnittsformen aufweisen, wie beispielsweise in Form eines Kreisabschnittes, oder mit nur einer Schabkante für die betreffende Drehrichtung versehen werden. Ebenso könnten die Schaber auch schräg verlaufend oder sichelförmig gekrümmt ausgebildet sein.

## Patentansprüche

1. Mischwerkzeug (18) für eine Speiseeismaschine, das in einen zylindrischen Behälter (1) der Speiseeismaschine zentrisch einführbar und dort rotierend antreibbar ist und das mindestens einen von einer zentralen Welle (6) auskragenden Schaber (12, 13) aufweist an dessen von der zentralen Welle abgewandten Ende ein im Bereich der Behälterwand (7) wirksamer Rührer (14, 15) angeordnet ist, der einen im Behälter zumindest von unten nach oben gerichteten Strömungsverlauf einer in denselben eingefüllten Speiseeismischung bewirkt, und der gegenüber der zentralen Welle (6) geneigt verlaufend angeordnet ist und der eine gegenüber der zentralen Welle geneigt verlaufende mit der Behälterwand zusammenwirkende Schabkante (18, 19) aufweist, dadurch gekennzeichnet, dass der Rührer (14, 15) zusätzlich an seinem freien oberen Ende einen den Rührer überragenden Zusatzschaber (20, 21) aufweist, der eine parallel zu der achse der zentralen Welle verlaufende, mit der Behälterwand (7) zusammenwirkende messerförmige Zusatzschabkante (22, 24) aufweist, die einen Winkel mit der Schabkante des Rührers bildet.

## Claims

1. A mixing tool (8) for an ice-cream machine, which tool is insertable centrally into a cylindrical container (1) of the ice-cream machine and can be driven to rotate therein and which has at least one scraper (12, 13) projecting from a central shaft (6), a stirrer (14, 15) operative at the location of the container wall (7) being arranged at the scraper end which is remote from the central shaft and producing in the container in an ice-cream mixture filled into said container a flow at least directed from bottom to top, which stirrer is arranged to be inclined relative to the central shaft (6) and has a scraping edge (18, 19) which is inclined relative to the central shaft and cooperates with the container wall, characterized in that at its free upper end the stirrer (14, 15) in addition comprises an additional scraper (20, 21) which projects above the stirrer and has a knife-shaped additional scraping edge (22, 24) cooperating with the container wall (7), extending parallel to the axis of the central shaft, and forming an angle with the scraping edge of the stirrer.

## Revendications

1. Organe mélangeur (8) pour une sorbetière qui peut être introduit, centré, dans un récipient cylindrique (1) de la sorbetière et y être entraîné en rotation et qui comporte au moins un racloir (12, 13) s'étendant à partir d'un arbre central (6), sur l'extrémité opposée à l'arbre central duquel est monté un agitateur (14, 15) opérant dans la zone de la paroi (7) du récipient, qui assure une circulation dans le récipient, au moins de bas en haut, d'une préparation pour crème glacée versée dans ce récipient et qui est installé dans une position inclinée par rapport à l'arbre central (6) et présente une arête de raclage (18, 19) inclinée par rapport à l'arbre central et coopérant avec la paroi du récipient, caractérisé en ce que l'agitateur (14, 15) présente, en supplément, à son extrémité supérieure libre, un racloir additionnel (20, 21) en saillie sur cet agitateur, qui comporte une arête de raclage additionnelle (22, 24) en forme de couteau, s'étendant parallèlement à l'axe de l'arbre central, coopérant avec la paroi (7) du récipient et faisant un angle avec l'arête de raclage de l'agitateur.

Fig.1

Fig.2

Fig.3